# EUROPEAN PATENT APPLICATION

(11) **EP 1 860 880 A2**
(43) Date of publication of application: **28.11.2007**
(21) Application number: 07108786.0
(22) Date of filing: 23.05.2007
(51) Int. Cl.: H04N 7/173, H04N 5/445

(54) **Broadcasting system and method of processing channel information in broadcasting system**

(30) Priority: 24.05.2006 KR 20060046657
(71) Applicant: LG ELECTRONICS INC., Seoul 150-721 (KR)
(72) Inventor: Yun, Chang Sik, Daejeon 306-824 (KR); Kim, Bong Seok, Gangnam-gu, Seoul 135-858 (KR)
(74) Representative: Cabinet Plasseraud

(57) **Abstract**

An apparatus and method for processing channel information in a broadcasting system for transmitting/receiving a cable broadcasting signal are disclosed. In particular, a headend which transmits a broadcasting signal and channel information transmits plural pieces of channel information having different sizes with respect to a single channel to broadcasting receivers. Each of the broadcasting receivers selects most suitable channel information from the plural pieces of channel information of the single channel and displays the selected channel information on a screen for the channel. Accordingly, it is possible to provide users with the channel information which can most accurately represent the contents of the displayed channel.

## Description

This application claims the benefit of Korean Patent Application No. 10-2006-0046657, filed on May 24, 2006, which is hereby incorporated by reference as if fully set forth herein.

### BACKGROUND OF THE INVENTION

### Field of the Invention

The present invention relates to a broadcasting system for transmitting/receiving a cable broadcasting signal and a method of processing channel information in the broadcasting system.

### Discussion of the Related Art

A cable broadcasting system, which is one of many broadcasting systems, includes a cable broadcasting station, which is a transmitter side for transmitting a cable broadcasting signal, and a broadcasting receiver for receiving the transmitted cable broadcasting signal. The cable broadcasting station is also called a headend.

For example, the broadcasting receiver adopts an open cable type in which a cablecard including a conditional access (CA) is separated from a body. The cablecard uses, for example, a PCMCIA card. The cablecard is configured to be detachably assembled to a body slot of the broadcasting receiver and may be called a POD (point of deployment) module. The body into which the cablecard is inserted is called a host. For example, a digital built-in television set or a digital ready television set corresponds to the host, and the cablecard and the host configure the broadcasting receiver.

The headend transmits a variety of information, containing channel information, to broadcasting receivers.

At this time, the broadcasting receivers are different in a method of displaying channel information on a screen and length of the channel information, that is, the capacity of the channel information, according to manufacturers or the models of the same manufacturer.

However, since the headend cannot check the statuses of the broadcasting receivers, the headend unilaterally transmits channel information having a constant length to all the broadcasting receivers.

Accordingly, some of the broadcasting receivers cannot properly display the channel information on its screen.

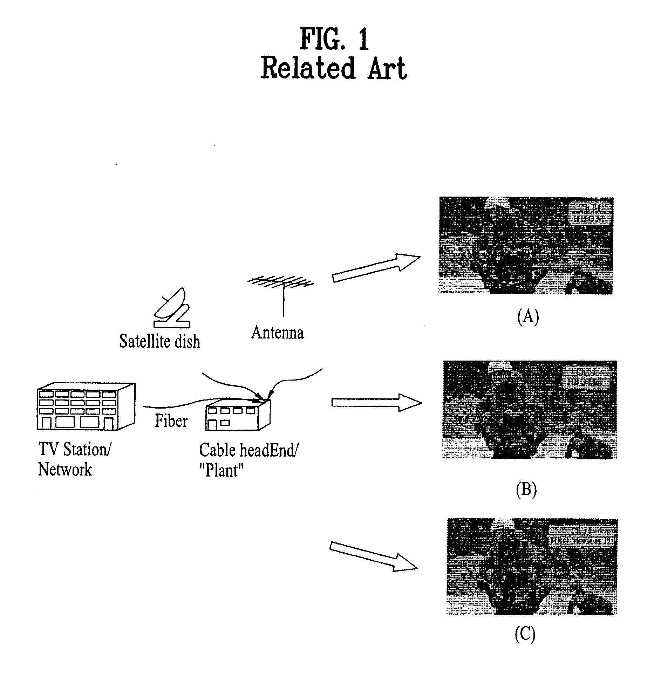

For example, assuming that the headend transmits channel information 'HBO Movie at 1970', the broadcasting receiver shown in FIG. 1(A) displays only 'HBO M', the broadcasting receiver shown in FIG. 1(B) displays only 'HBO Mov', the broadcasting receiver shown in FIG. 1(C) shows only 'HBO Movie at 19', and the remaining portions thereof may not be displayed. In FIG. 1(A), since only 'HBO M' is displayed, viewers cannot know whether 'M' indicates movie or music. In FIG. 1(C), since `70' is deleted, it is difficult to determine that accurate channel information is provided to viewers.

Since the channel information containing a long channel name is unilaterally transmitted to all the broadcasting receivers without considering the statuses of the broadcasting receivers, some of the broadcasting receivers may not display a portion of the channel information on its screen. In particular, when only the portion of the channel information is displayed, it is difficult to understand the meaning of the channel information.

In such a case, since the channel information of a channel which is being displayed is not accurately recognized by the viewers, viewers are uncomfortable.

### SUMMARY OF THE INVENTION

Accordingly, the present invention is directed to a broadcasting system for transmitting/receiving a cable broadcasting signal and a method of processing channel information in the broadcasting system that substantially obviate one or more problems due to limitations and disadvantages of the related art.

An object of the present invention is to provide a bi-directional broadcasting system having a bi-directional function for allowing a broadcasting receiver to effectively display channel information on its screen.

Another object of the present invention is to provide a broadcasting system for allowing a headend to transmit channel information suitable for each broadcasting receiver and a method of processing channel information.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a transmission system includes a channel information generator and a transmitter. The channel information generator transmits plural pieces of channel information having different sizes with respect to a single channel. The transmitter transmits the channel information to broadcasting receivers.

In another aspect of the present invention, a reception system includes a channel information processor and a controller. The channel information processor receives and decodes plural pieces of channel information having different sizes with respect to a single channel. The controller selects one of the plural pieces of channel information of the single channel decoded by the channel information processor and displays the selected channel information on a screen for displaying the channel.

In another aspect of the present invention, a reception system includes a card and a host. The host receives plural pieces of channel information having different sizes with respect to a single channel and transmits the plural pieces of channel information to the host. The host receives and decodes the plural pieces of channel information having the different sizes from the card with respect to the single channel and selects and displays one of the plural pieces of decoded channel information on a screen for displaying the channel.

In another aspect of the present invention, a method of processing channel information includes generating plural pieces of channel information having different sizes with respect to a single channel; and transmitting the plural pieces of channel information to broadcasting receivers.

In another aspect of the present invention, a method of processing channel information includes receiving and decoding plural pieces of channel information having different sizes with respect to a single channel; and selecting one of the plural pieces of decoded channel information with respect to the single channel and displaying the selected channel information on a screen for displaying the channel.

In another aspect of the present invention, a method of processing channel information includes generating a first field for displaying the number of channel information pieces corresponding to a single channel; generating a second field for displaying the length of a corresponding channel information; and generating a third field for displaying channel information containing a source name for representing the contents of a channel. The generating of the first, second and third fields are repeated by the number of channel information pieces indicated by the first field to display the plural pieces of channel information having different sizes with respect to the single channel.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIGs. 1(A) to 1(C) are views showing examples of conventional broadcasting receivers which cannot accurately display channel information;

FIG. 2 is a conceptual diagram of a cable broadcasting network including a host and a cablecard according to the present invention;

FIG. 3 is a flowchart showing a method of processing channel information according to an embodiment of the present invention;

FIGs. 4(A) to 4(C) are views showing examples of broadcasting receivers according to the present invention which can accurately display channel information;

FIG. 5 is a view showing the syntax structure of a source name subtable according to an embodiment of the present invention; and

FIG. 6 is a block diagram showing a broadcasting receiver for receiving a cable broadcasting signal according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

In addition, although the terms used in the present invention are selected from generally known and used terms, some of the terms mentioned in the description of the present invention have been selected by the applicant at his or her discretion, the detailed meanings of which are described in relevant parts of the description herein. Furthermore, it is required that the present invention is understood, not simply by the actual terms used but by the meanings of each term lying within.

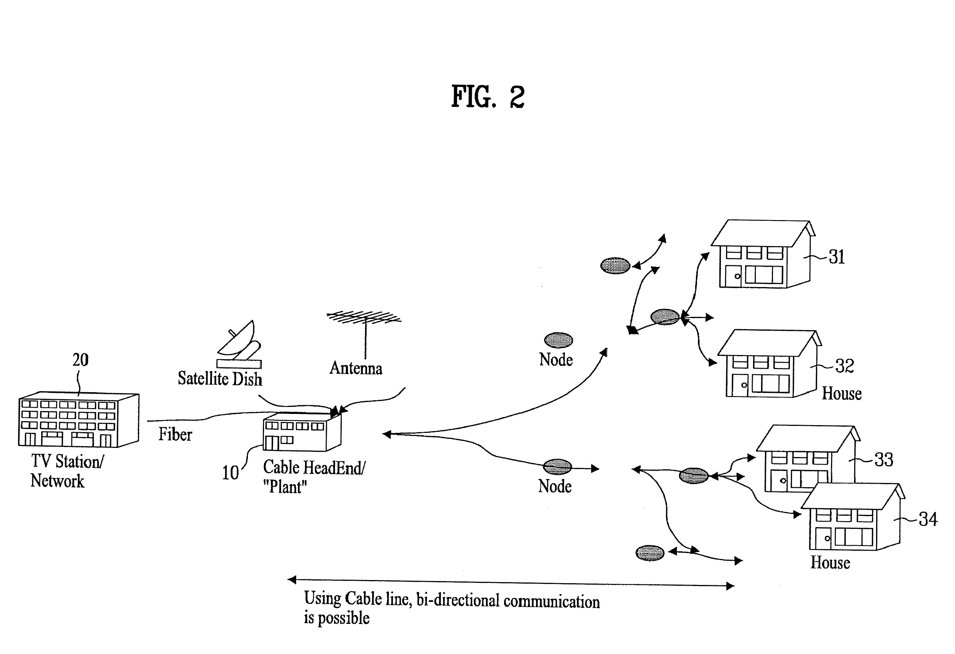

FIG. 2 is a conceptual diagram of a cable broadcasting network among a headend and broadcasting receivers for receiving a cable broadcasting signal according to the present invention. The headend 10 receives the broadcasting signal from a television broadcasting station 20 via a variety of communication networks and transmits the broadcasting signal to the broadcasting receivers 31 to 34 via a cable network including nodes. The broadcasting receivers and the headend exchange data via a cable network infrastructure for bi-directionally transmitting data.

In the present invention, the headend transmits plural pieces of channel information having different sizes to the broadcasting receivers with respect to a single channel, and each of the broadcasting receivers selects and displays one of the plural pieces of channel information on a screen. The channel information contains at least a source name as information for representing the contents of a channel displayed on the screen.

The channel information may be generated by the headend or the television broadcasting station. To this end, the headend or the television broadcasting station includes a channel information generator for generating plural pieces of channel information with respect to a single channel. The channel information generated by the channel information generator is transmitted from a transmitter (not shown) of the headend to the broadcasting receivers.

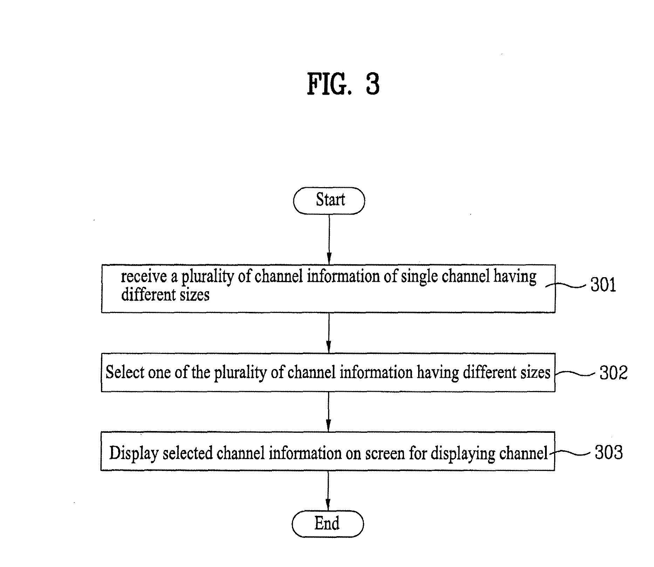

FIG. 3 is a flowchart showing a method of processing channel information in each of the broadcasting receivers when the headend transmits the plural pieces of channel information having a variety of sizes with respect to the single channel.

That is, when the plural pieces of channel information having the variety of sizes are received with respect to the single channel (step 301), one of the plural pieces of channel information having the variety of sizes is selected (step 302). There are several methods of selecting one of the plural pieces of channel information with respect to the single channel. For example, one of the plural pieces of channel information may be selected by a user by displaying the plural pieces of channel information on a screen in a menu form. Alternatively, one of the plural pieces of channel information may be automatically selected by the receiver. Since the receiver has information about a maximum length of the channel information which can be displayed on the screen, the receiver can select the channel information which can most accurately represent the contents of the channel within the maximum length.

When one of the plural pieces of channel information having the variety of sizes with respect to the single channel is selected by the user or the receiver in the step 302, the selected channel information is displayed on the screen for displaying the channel (step 303).

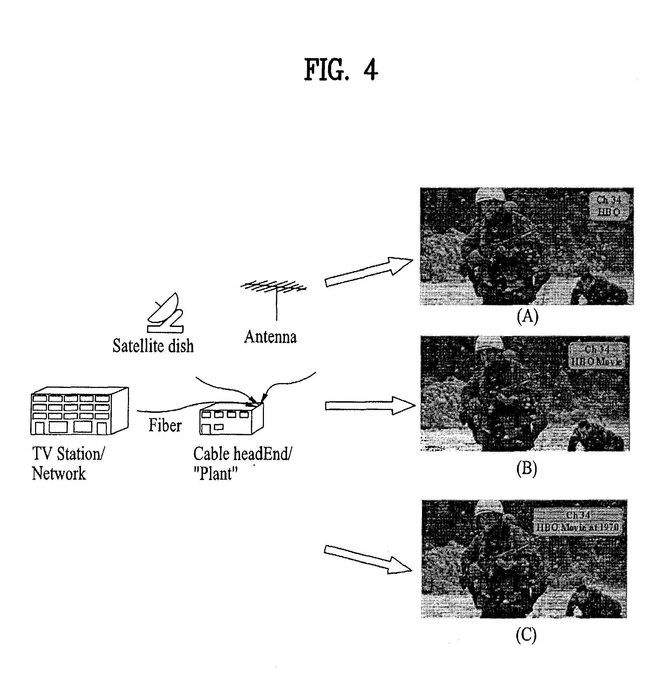

For example, it is assumed that the maximum length value of the channel information which can be displayed on the screen of the broadcasting receiver shown in FIG. 4 (A) is 5 (including alphanumeric characters), the maximum length value of the channel information which can be displayed on the screen of the broadcasting receiver shown in FIG. 4 (B) is 11, and the maximum length value of the channel information which can be displayed on the screen of the broadcasting receiver shown in FIG. 4(C) is 20. It is assumed that the headend transmits three pieces of channel information, that is, 'HBO', 'HBO Movie', and 'HBO Movie at 1970', with respect to the single channel.

At this time, the broadcasting receiver shown in FIG. 4(A) selects and displays 'HBO', the broadcasting receiver shown in FIG. 4(B) selects and displays 'HBO Movie', and the broadcasting receiver shown in FIG. 4(C) selects and displays 'HBO Movie at 1970'.

In the present invention, the headend transmits the plural pieces of channel information having different sizes, which can accurately represent the channel contents of the single channel, and each of the receivers selects channel information most suitable for the receiver from the plural pieces of channel information and displays the selected channel information on the screen for displaying the channel, thereby providing most accurate channel information to the user.

According to one embodiment of the present invention, the plural pieces of channel information having the different sizes are transmitted using a source name subtable with respect to the single channel.

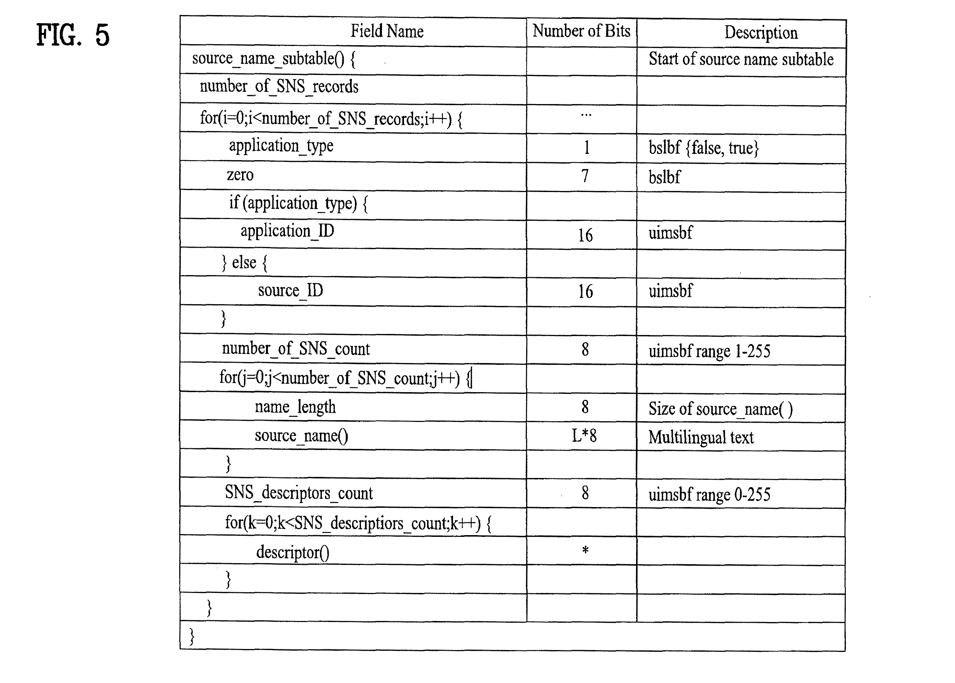

FIG. 5 is a view showing the syntax structure of a source name subtable according to an embodiment of the present invention.

In FIG. 5, a "number_of_SNS_records" field indicates the number of channels for transmitting channel information. The plural pieces of channel information of the single channel are contained in a first iteration which is iterated by a value indicated in the "number_of_SNS_records" field.

The first iteration includes a "number_of_SNS_count" field indicating the number of channel information pieces and a second iteration which is iterated by a value indicated in the "number_of_SNS_count" field.

According to one embodiment of the present invention, 8 bits are allocated to the "number_of_SNS_count" field such that values of 1 to 255 can be represented.

For example, if three pieces of channel information having different sizes are transmitted with respect to channel No. 11, the value of the "number_of_SNS count" field is 3 and the second iteration is repeated three times to transmit the three pieces of channel information having the different sizes.

The second iteration includes a "name_length" field indicating the length of the transmitted channel information and a "source_name()" field indicating the source name for representing the actual contents of the channel.

According to one embodiment of the present invention, 8 bits are allocated to the "name_length" field and the "source name()" field is represented in a multilingual text format.

According to the present invention, an "application_type" field indicating whether the attribute of the transmitted channel information is an application and an "ID" field indicating an application ID or a source ID according to the value of the "application_type" field may be included.

A "SNS_descriptors_count" field and a descriptor() may be used to transmit additional information other than the channel information.

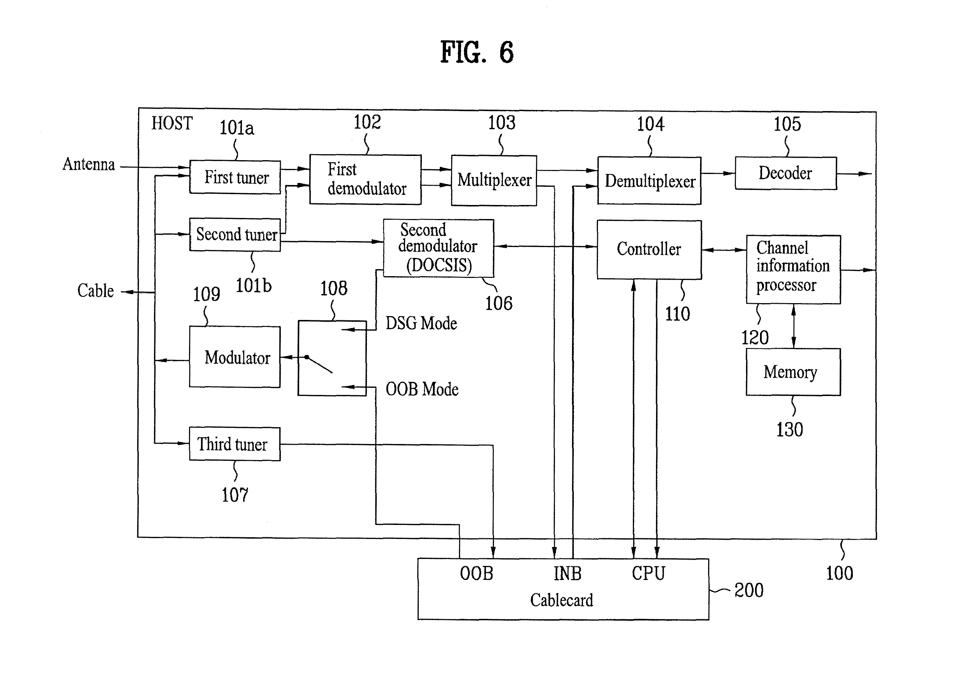

FIG. 6 is a block diagram showing a broadcasting receiver according to an embodiment of the present invention. The broadcasting receiver includes a host 100 and a cablecard 200 which is configured to be detachably assembled to the host.

An interface between the host 100 and the cablecard 200 may include a single stream cablecard interface and a multi-stream cablecard interface.

The single stream cablecard interface allows the cablecard to process one broadcasting stream and allows the host to decode the broadcasting stream. In contrast, the multi-stream cablecard interface allows the cablecard to process a plurality of multiplexed broadcasting streams and allows the host to decode the plurality of broadcasting streams.

The host 100 can receive only a cable broadcasting signal or at least one of a cable broadcasting signal, a terrestrial broadcasting signal and a satellite broadcasting signal. In the present embodiment, the host 100 can receive at least one of the cable broadcasting signal, the terrestrial broadcasting signal and the satellite broadcasting signal.

Meanwhile, a bi-directional communication method between the broadcasting receiver and the headend may include an out-of-band (OOB) mode and a DOCSIS settop gateway (DSG) mode. Accordingly, a viewer can select and view a desired program via the host using any one of the two modes. Alternatively, the viewer can directly participate in a broadcasting program or select and view necessary information. A data broadcasting service can be provided using the OOB mode and the DSG mode.

The OOB mode is the standard of transport specifications between a cable broadcasting station (headend) and an intersec instrument within a settop box. In contrast, the DSG mode indicates a transport mode between a cable modem control system of a cable broadcasting station and a data-over-cable service interface specifications (DOCSIS)-based cable modem within a settop box. At this time, the DOCSIS can transmit data using the cable modem.

The broadcasting receiver shown in FIG. 6 is a cable broadcast receiver using a combination of the OOB mode and the DSG mode.

The host of the digital broadcast receiver shown in FIG. 6 includes a first tuner 101a, a second tuner 101b, a first demodulator 102, a multiplexer 103, a demultiplexer 104, a decoder 105, a second demodulator (DOCSIS) 106, a third tuner 107, a switching unit 108, a modulator 109, a controller 110, a channel information processor 120, and a memory 130.

The cablecard 200 is one of a single (S)-card for processing a single stream and a multi (M)-card for processing a multi-stream.

The first tuner 101a tunes only a specific channel frequency of a cable audio/video (A/V) broadcasting signal transmitted in-band via a cable or a terrestrial A/V broadcasting signal transmitted via an antenna, and outputs the tuned signal to the first modulator 102.

The terrestrial broadcasting signal and the cable broadcasting signal are different from each other in a transport method. The first demodulator 102 can perform different demodulating methods with respect to different signals. For example, the terrestrial A/V broadcasting signal may be modulated by a Vestigial Sideband Modulation (VSB) method and the cable A/V broadcasting signal may be modulated by a Quadrature Amplitude Modulation (QAM) method. In this case, the first demodulator 102 demodulates the tuned signal by the VSB method or the QAM method according to a signal selected by the first tuner 101a.

The signal demodulated by the first demodulator 102 is multiplexed by the multiplexer 103 to output a stream. At this time, if a plurality of in-band tuners for receiving the cable A/V broadcasting signal is included and different channels are simultaneously tuned by the in-band tuners and are demodulated by respective demodulators to output a multi-stream, the multi-stream is multiplexed by the multiplexer 103 to output the multiplexed signal.

If the signal demodulated by the first demodulator 102 is the stream of the terrestrial broadcasting signal, the demodulated stream is output to the demultiplexer 104 via the multiplexer 103. In contrast, if the signal demodulated by the first demodulator 102 is the stream of the cable broadcasting signal, the demodulated stream is output to the demultiplexer 104 via the multiplexer 103 and the cablecard 200 mounted in a slot.

The cablecard 200 includes a conditional access (CA) system for preventing illegal copy of higher value-added broadcasting contents and restricting access to the contents and is also called point of deployment (POD).

That is, if the single stream or the multi-stream of the cable broadcasting signal output from the multiplexer 103 is scrambled, the cablecard 200 descrambles the single stream or the multi-stream and outputs the descrambled stream to the demultiplexer 104. If the cablecard 200 is not mounted, the signal stream or the multi-stream of the cable broadcasting signal demodulated by the first demodulator 102 is directly output to the demultiplexer 104. In this case, since the scrambled cable signal is not descrambled, the signal is not normally displayed on the screen.

The demultiplexer 104 receives the broadcasting signal, demultiplexes the received broadcasting signal into audio, video, and data streams, and outputs the streams to the demodulator 105. The decoder 105 may include an audio decoder, a video decoder, and a data decoder.

That is, the audio stream demultiplexed by the demultiplexer 104 is decoded by the audio decoder, the video stream is decoded by the video decoder, and the data stream is decoded by the data decoder.

The second tuner 101b tunes a specific channel frequency of the data broadcasting signal transmitted via the cable in the DSG mode and outputs the tuned signal to the second demodulator 106. The second demodulator 106 demodulates the data broadcasting signal of the DSG mode and outputs the demodulated broadcasting signal to the controller 110.

The third tuner 107 tunes a specific channel frequency of a downlink data broadcasting signal transmitted via the cable in the OOB mode and outputs the tuned signal to the cablecard 200.

If bi-directional communication between the headend and the broadcasting receiver is possible, uplink information (e.g. pay program application, diagnostic information of the host, or the like) transmitted from the broadcasting receiver to the headend may be transmitted in the OOB mode or the DSG mode. Accordingly, the host may include the switching unit 108 so as to select any one of the modes and transmit the information.

In the OOB mode, user information or system diagnostic information is output to the modulator 109 via the cablecard 200 and the switching unit 108, and the modulator 109 modulates the output signal using a Quadrature Phase Shift Keying (QPSK) modulation method and transmits the modulated signal to the headend via the cable. In the DSG mode, user information or system diagnostic information is output to the modulator 109 via the controller 110, and the switching unit 108 is modulated by the modulator 109 using a QAM-16 modulation method to be transmitted to the headend via the cable.

Meanwhile, the source name subtable containing the plural pieces of channel information having different sizes with respect to the single channel is transmitted from the headend to the cablecard 200. Then, the cablecard 200 transmits the source name subtable to the controller 110 of the host 100.

The controller 110 outputs the source name subtable to the channel information processor 120. The channel information processor 120 decodes the source name subtable and extracts the plural pieces of channel information having different sizes with respect to the single channel. Channel information most suitable for the host is selected from the plural pieces of channel information extracted under the control of the controller 110. The selected channel information may be directly displayed on a screen when the channel is displayed or may be stored in the memory 130, if necessary.

In the present invention, the controller 110 may perform the function of the channel information processor 120.

The present invention is applicable to a digital broadcasting system for performing bi-directional communication, such as a terrestrial broadcasting system, a satellite broadcasting system, or an internet protocol television (IPTV) system, as well as a cable broadcasting system. At this time, in the satellite broadcasting system, a smart card may be used instead of the cablecard. In such a case, an interface module for interfacing with an external device may be included in the system or outside the system.

Instead of a hardware conditional access system (CAS) which is separately mounted in the broadcasting receiver, that is, a settop box or an integral type television of a subscriber, a CAS function can be performed by downloading a software CAS in a settop box or an integral type television of a subscriber.

A method of downloading the software CAS may be performed by automatically downloading a CA image from the headend when a security processor which is previously mounted in the settop box is connected to a network.

According to the broadcasting system and the method of processing the channel information of the present invention, the headend which transmits a broadcasting signal and channel information transmits plural pieces of channel information having different sizes with respect to the single channel to the broadcasting receivers. Each of the broadcasting receivers selects most suitable channel information from the plural pieces of channel information of the single channel and displays the selected channel information on the screen for displaying the channel. According to the present invention, it is possible to provide users with channel information for accurately representing the contents of the displayed channel.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A transmission system comprising:
a channel information generator which transmits plural pieces of channel information having different sizes with respect to a single channel; and
a transmitter which transmits the channel information to broadcasting receivers.

2. The transmission system according to claim 1, wherein the channel information contains information having a text format for representing contents of the channel.

3. The transmission system according to claim 1, wherein the channel information contains a source name for representing contents of the channel.

4. The transmission system according to claim 1, wherein the channel information contains the length of the channel information.

5. A reception system comprising:
a channel information processor which receives and decodes plural pieces of channel information having different sizes with respect to a single channel; and
a controller which selects one of the plural pieces of channel information of the single channel decoded by the channel information processor and displays the selected channel information on a screen for displaying the channel.

6. The reception system according to claim 5, wherein the controller extracts the length of channel information which can be displayed on the screen and selects channel information having a length smaller than or equal to that of the channel information extracted from the plural pieces of decoded channel information with respect to the single channel.

7. A reception system comprising:
a card which receives plural pieces of channel information having different sizes with respect to a single channel; and
a host which receives the plural pieces of channel information having the different sizes from the card with respect to the single channel and selects and displays one of the plural pieces of decoded channel information on a screen for displaying the channel.

8. The reception system according to claim 7, wherein the card is a single cablecard for receiving and processing a single stream.

9. The reception system according to claim 7, wherein the card is a multi-cablecard for receiving and processing a multi-stream.

10. The reception system according to claim 7, wherein the host extracts the length of the channel information which can be displayed on the screen and selects channel information having a length smaller than or equal to that of the channel information extracted from the plural pieces of decoded channel information.

11. A method of processing channel information, the method comprising:
generating plural pieces of channel information having different sizes with respect to a single channel; and
transmitting the plural pieces of channel information to broadcasting receivers.

12. The method according to claim 11, wherein the channel information contains information having a text format for representing contents of the channel.

13. The method according to claim 11, wherein the channel information contains a source name for representing contents of the channel.

14. The method according to claim 11, wherein the channel information contains the length of the channel information.

15. A method of processing channel information, the method comprising:
receiving and decoding plural pieces of channel information having different sizes with respect to a single channel; and
selecting one of the plural pieces of decoded channel information with respect to the single channel and displaying the selected channel information on a screen for displaying the channel.

16. The method according to claim 15, wherein the selecting of one of the plural pieces of decoded channel information comprises:
extracting the length of channel information which can be displayed on the screen;
selecting channel information having a length smaller than or equal to that of the channel information extracted from the plural pieces of decoded channel information with respect to the single channel; and
displaying the selected channel information on the screen for displaying the channel.

17. The method according to claim 15, wherein the selecting of one of the plural pieces of decoded channel information further comprises storing the selected channel information.

18. A method of processing channel information, the method comprising:
generating a first field for displaying the number of channel information pieces corresponding to a single channel;
generating a second field for displaying the length of a corresponding channel information; and
generating a third field for displaying channel information containing a source name for representing the contents of a channel,
wherein the generating of the first, second and third fields are repeated by the number of channel information pieces indicated by the first field to display the plural pieces of channel information having different sizes with respect to the single channel.
